Europäisches Patentamt

European Patent Office

Office européen des brevets

(19)

(11) **EP 0 586 643 B1**

(12) # FASCICULE DE BREVET EUROPEEN

(45) Date de publication et mention
de la délivrance du brevet:
**06.11.1996  Bulletin 1996/45**

(21) Numéro de dépôt: **93905144.7**

(22) Date de dépôt: **24.03.1993**

(51) Int Cl.⁶: **G04C 10/02**

(86) Numéro de dépôt international:
**PCT/CH93/00083**

(87) Numéro de publication internationale:
**WO 93/19405 (30.09.1993 Gazette 1993/24)**

(54) **PIECE D'HORLOGERIE COMPRENANT UNE SOURCE D'ENERGIE CONSTITUEE PAR UNE CELLULE PHOTOVOLTAIQUE**

Uhrwerk mit einer aus einer photovoltaischen Zelle bestehenden Energiequelle

WATCH ASSEMBLY WITH A POWER SOURCE CONSISTING OF A PHOTOVOLTAIC CELL

(84) Etats contractants désignés:
**CH DE FR GB IT LI**

(30) Priorité: **26.03.1992  CH 961/92**

(43) Date de publication de la demande:
**16.03.1994  Bulletin 1994/11**

(73) Titulaire: **ASULAB S.A.**
**CH-2501 Bienne (CH)**

(72) Inventeurs:
• **DINGER, Rudolf**
**CH-2024 St-Aubin (CH)**
• **SAURER, Eric**
**CH-2022 Bevaix (CH)**
• **GRAETZEL, Michael**
**CH-1025 St-Sulpice (CH)**

(74) Mandataire: **de Montmollin, Henri et al**
**ICB**
**Ingénieurs Conseils en Brevets SA**
**Rue des Sors 7**
**2074 Marin (CH)**

(56) Documents cités:
• **PATENT ABSTRACTS OF JAPAN vol. 8, no. 242 (P-311)(1679) 7 Novembre 1984 & JP-A-59 116 079**
• **PATENT ABSTRACTS OF JAPAN vol. 13, no. 468 (E-834)23 Octobre 1989 & JP-A-11 81 477**
• **PATENT ABSTRACTS OF JAPAN vol. 5, no. 110 (P-71)(782) 17 Juillet 1981 & JP-A-56 51 691**
• **PATENT ABSTRACTS OF JAPAN vol. 7, no. 54 (P-180)(1199) 4 Mars 1983 & JP-A-57 201 878**

## Description

La présente invention concerne une pièce d'horlogerie pourvue d'une source d'énergie constituée par une ou plusieurs cellules photovoltaïques.

On connaît déjà des pièces d'horlogerie, telles que des montres-bracelet comportant une cellule photovoltaïque utilisée comme source d'énergie.

Dans certaines de ces montres, la cellule est disposée sur la boîte ou sur le bracelet, à un endroit tel que cette cellule puisse être exposée à un rayonnement lumineux supposé suffisant pour pouvoir assurer l'alimentation en courant des éléments de cette montre fonctionnant de façon électrique.

La disposition de la cellule sur la montre nuit à son esthétique.

De plus, cet agencement ne permet pas à la cellule photovoltaïque de fournir une tension suffisamment importante pour assurer l'alimentation en courant dans toutes les conditions d'utilisation, et ce notamment dans des conditions de faible éclairement et en lumière diffuse.

Cela dit, on connait également des montres à affichage digital, comme celle qui est décrite par exemple dans le document JP-A-56-51691, dont la ou les cellules photovoltaïques sont formées directement sur la face interne de la glace. Comme cette ou ces cellules, qui sont par exemple des cellules au silicium amorphe, ne sont pas transparentes à la lumière visible, elles doivent être disposées en dehors de la zone où se trouve la cellule d'affichage ou tout au moins des zones où cette cellule affiche des informations.

Ces montres présentent en fait les mêmes inconvénients que celles dont il a été question précédemment.

En effet, si l'on veut que les cellules photovoltaïques assurent en permanence une alimentation en courant suffisante pour que les montres fonctionnent correctement, elles doivent recouvrir une surface importante de la glace, ce qui conduit à des montres peu esthétiques.

Si, au contraire, on cherche à limiter la surface des cellules pour les rendre moins voyantes, le fonctionnement des montres risque d'être perturbé.

Une solution pour résoudre en partie ce problème est suggérée par le document JP-A-59-116079. Cette solution partielle consiste à équiper une montre d'une cellule photovoltaïque transparente qui est placée devant les moyens d'affichage et qui peut en même temps remplacer la glace. Toutefois, ce document ne donne aucune indication sur la façon dont la cellule transparente peut être réalisée. Or, si il est évident que le simple fait d'avoir une cellule photovoltaïque vraiment transparente, disposée devant les moyens d'affichage peut permettre, à certaines conditions, de ne pas porter atteinte à l'esthétique d'une montre, cela n'implique pas que cette cellule est également capable de produire une énergie toujours suffisante pour assurer le bon fonctionnement de cette montre.

D'autre part, il existe actuellement des cellules photovoltaïques comme celle qui est décrite par exemple dans le document WO-A-91/16719 qui sont des cellules du type photoélectrochimiques régénératrices à interface oxyde semiconducteur/électrolyte et qui comportent une couche de dioxyde de titane qui est réalisée sous forme d'une nanostructure formée de particules colloïdales frittées et une couche monomoléculaire de chromophores. Ces cellules ont le double avantage de présenter un rendement très élevé et d'être d'un prix de revient relativement bas. Malheureusement, elles absorbent une grande partie de la lumière qu'elles reçoivent dans le domaine du visible. Il n'est donc pas possible de les placer devant les moyens d'affichage d'une montre ou, plus généralement, d'une pièce d'horlogerie car elles rendraient très difficile, voire impossible, la lecture de l'heure et éventuellement des autres informations fournies par celle-ci.

La présente invention a pour but de fournir une pièce d'horlogerie munie d'une cellule photovoltaïque qui est ménagée de façon telle qu'elle ne nuise pas à l'esthétique de cette pièce tout en fournissant un niveau électrique suffisant pour l'alimentation de celle-ci.

A cet effet, la présente invention a pour objet une pièce d'horlogerie comprenant :

- une source d'énergie comportant au moins une cellule photovoltaïque capable de transformer un rayonnement lumineux en un courant électrique, cette cellule photovoltaïque comportant une surface active sensible au rayonnement lumineux,
- des moyens horométriques alimentés par ladite source d'énergie et capables de fournir une information horaire, et
- des moyens d'affichage conformés pour recevoir l'information horaire fournie par les moyens horométriques et destinés à afficher cette information pour la rendre lisible par un utilisateur, ces moyens d'affichage étant recouverts au moins potentiellement par une région transparente de la surface active de la cellule photovoltaïque, cette pièce d'horlogerie étant caractérisée en ce que ladite cellule photovoltaïque est constituée par une cellule photoélectrochimique régénératrice comprenant :
- un premier substrat transparent comportant une première électrode transparente,
- un second substrat transparent comportant une seconde électrode transparente sur laquelle est déposée une première couche d'un oxyde semiconducteur photoélectrochimiquement actif réalisée sous forme d'une nanostructure poreuse formée de particules colloïdales frittées, dont le diamètre est inférieur à la longueur de diffusion des porteurs de charge minoritaires créés par l'absorption dudit rayonnement lumineux dans lesdites particules,
- un électrolyte remplissant un espace compris entre lesdits premier et second substrats et imprégnant ladite nanostructure poreuse de façon à être en contact électrique avec lesdites première et seconde électrodes, et

- une seconde couche continue et dense d'un oxyde semiconducteur s'étendant entre ladite seconde électrode et ladite première couche d'oxyde semiconducteur.

D'autres caractéristiques et avantages de l'invention apparaîtront mieux à la lecture de la description détaillée qui suit, faite en référence aux dessins annexés donnés à titre d'exemple, et dans lesquels:

- la figure 1 est une vue schématique brisée représentant en coupe transversale une cellule photovoltaïque seule, équipant la pièce d'horlogerie selon l'invention;
- la figure 2 est une vue agrandie d'une région II de la figure 1;
- la figure 3 est une vue en coupe représentant de façon schématique une pièce d'horlogerie selon un premier mode de réalisation de l'invention, équipée d'une cellule représentée à la figure 1;
- la figure 4 est une vue de dessus de la pièce de la figure 3 ;
- la figure 5 est une demi-vue en coupe d'une pièce d'horlogerie selon un deuxième mode de réalisation;
- la figure 6 est une vue en coupe partielle très schématique d'une cellule selon une variante de réalisation; et
- la figure 7 est une représentation schématique d'un circuit d'alimentation électrique équipant une cellule de la pièce d'horlogerie selon l'invention et alimentant en courant un élément à fonctionnement électrique de cette pièce, tel qu'un moteur.

Dans le cadre de la description qui suit on entendra par l'adjectif transparent, transparent à la lumière visible et non diffusant.

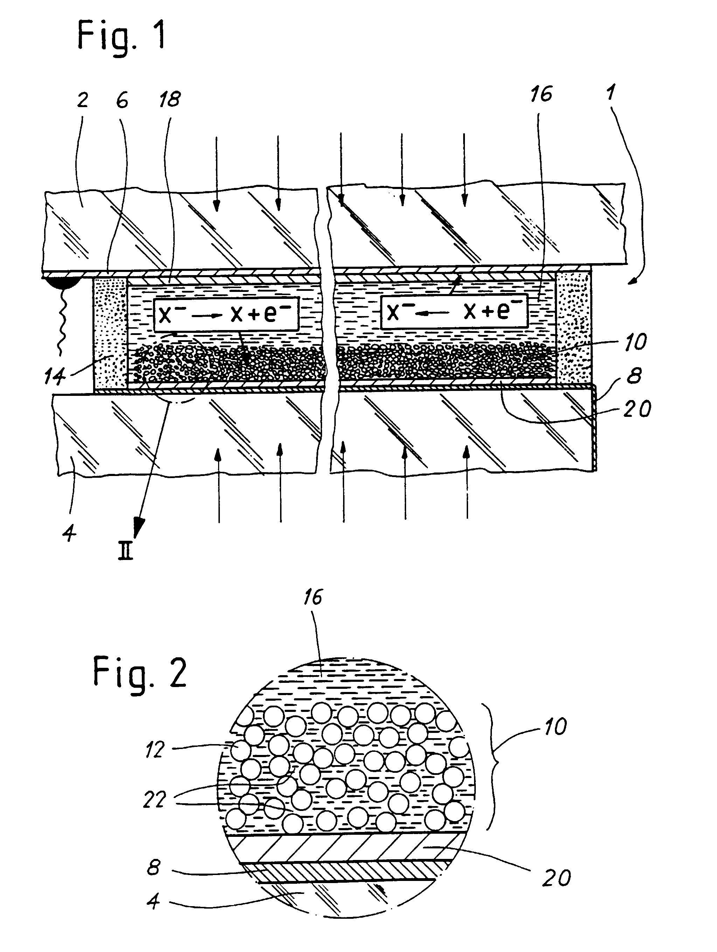

En se référant à la figure 1, on voit une cellule photoélectrochimique régénératrice désignée par la référence générale 1.

La cellule 1 comprend un premier substrat 2 transparent et un second substrat 4 également transparent comportant respectivement sur la totalité de la surface de leurs faces en regard une électrode 6, (respectivement 8) transparente. Pour des commodités de la description, les électrodes 6,8 pourront être désignées respectivement par première électrode et seconde électrode.

Ces électrodes 6, 8 sont de préférence réalisées sous la forme d'une couche mince d'un mélange d'oxyde d'indium/étain ou d'oxyde d'étain/antimoine. Bien entendu, l'homme de métier pourra choisir tout autre couche transparente équivalente.

Le substrat 4 comporte en outre une première couche 10 d'un oxyde semiconducteur photoélectrochimiquement actif réalisée sous forme d'une nanostructure poreuse formée de particules colloïdales 12 frittées qui sera décrite plus en détail ci-après.

Les substrats 2 et 4 sont réunis entre eux par exemple, par un cadre de scellement 14 pour définir un espace rempli d'un électrolyte 16 comprenant de façon classique un couple rédox. L'électrolyte 16 imprègne la structure poreuse 10 de sorte que l'interface électrolyte oxyde semiconducteur présente une surface effective très grande

Selon l'invention, l'électrode 8 est recouverte d'une seconde couche continue et dense 20 d'un oxyde semiconducteur.

La seconde couche d'oxyde semiconducteur 20 s'étend ainsi entre la seconde électrode 8 et la première couche d'oxyde semiconducteur 10.

La couche continue et dense d'oxyde semiconducteur 20 permet de limiter voire d'éviter tout court-circuit pouvant se produire sur la seconde électrode 8 entre les formes oxydées et réduites du couple rédox contenu dans l'électrolyte 16 et par là-même augmenter la tension disponible aux bornes des électrodes de la cellule.

Dans l'exemple représenté, l'électrode 6 est par ailleurs recouverte d'une couche électrocatalytique 18 qui s'étend entre l'électrode 6 et l'électrolyte 16.

La couche électrocatalytique 18 permet de réduire la surtension pour la réduction de la forme oxydée du couple rédox contenu dans l'électrolyte 16 et d'améliorer les performances globales de la cellule.

La couche électrocatalytique 18 peut par exemple être déposée par voie galvanique ou par dépôt sous vide, et la couche d'oxyde semiconducteur 20 peut, quant à elle, être par exemple déposée par dépôt chimique ou physique en phase vapeur.

On notera que le dessin ne reflète pas les dimensions exactes de la cellule ainsi formée, ces dimensions ayant été fortement exagérées pour des raison de clarté.

En se référant également à la figure 2, on voit que la couche 10 comporte des pores 22 formés par les vides présents entre les particules 12 de l'oxyde semiconducteur. Ces pores 22 sont interconnectés entre eux et sont remplis de l'électrolyte 16 de sorte que la percolation de ce dernier à travers la couche 10 est facilement réalisée.

Les particules colloïdales 12 présentent, de préférence, un diamètre de 1 à 200 nanomètres et forment à la surface du substrat 4 une couche dont l'épaisseur est comprise entre 10 et 20'000 nanomètres. Ceci conduit donc à réaliser une couche 10 présentant une surface effective très élevée c'est-à-dire une couche dont le rapport surface réelle/surface projetée est de l'ordre de 2000.

On notera à ce propos que la faible taille des particules 12, en liaison avec la faible épaisseur de la couche 10, offre l'avantage d'obtenir une couche 10 qui ne diffuse pas la lumière.

En outre, la taille des particules 12 et l'épaisseur de la couche 10 ont une incidence importante sur la réponse de la couche 10 à l'excitation par la lumière incidente.

En effet, les particules 12 de la couche 10 absorbent les photons dont l'énergie est égale ou dépasse la différence d'énergie entre la bande de conduction et la bande de valence. L'absorption de lumière, symbolisée par des flèches au dessin, entraîne ainsi la création de paires électrons-trous dans les particules 12, contrairement au cas des particules recouvertes d'un film de chromophores de l'art antérieur, film dans lequel la lumière incidente est absorbée par le chromophore et non par l'oxyde semiconducteur. Dans ce cas, les électrons sont transférés à partir des niveaux excités des chromophores dans la bande de conduction de l'oxyde semiconducteur, les charges positives correspondantes associées aux chromophores étant piégées à la surface du semiconducteur provoquant ainsi une séparations des charges dont résulte l'effet photovoltaïque recherché. Avec un oxyde semiconducteur de type n tel que le $TiO_2$, les électrons sont les porteurs majoritaires alors que les trous sont les porteurs minoritaires. Or, lorsque un tel dispositif semiconducteur/électrolyte est utilisé pour créer de l'électricité à partir de la lumière absorbée, il est nécessaire que les trous puissent diffuser jusqu'à la jonction semiconducteur/électrolyte avant que la recombinaison avec les électrons puisse se produire. En d'autres termes, la longueur de diffusion des porteurs minoritaires désignée par $l_{pm}$ doit être plus longue que la distance que ces porteurs doivent parcourir avant d'atteindre la jonction. Cette longueur de diffusion est définie par

$$l_{pm} = (2Dt)^{0,5}$$

dans laquelle t est la durée de vie d'un trou et D est la constante de diffusion du porteur minoritaire. A titre d'exemple la valeur de $l_{pm}$ est de 100 nanomètres pour le $TiO_2$.

On réalise ainsi, selon l'invention, une couche d'oxyde semiconducteur 10 formée d'une agglomération de particules colloïdales 12 dont le diamètre est inférieur à la longueur de diffusion des porteurs de charge minoritaires de sorte que ces porteurs ont une grande probabilité d'atteindre la jonction semiconducteur/ électrolyte et obtenir une séparation efficace des porteurs de charges si bien que le rendement de conversion est augmenté.

Pour le dépôt de la couche 10, on se référera par exemple au procédé de dépôt d'une telle couche décrit dans la demande de brevet internationale WO-A-91/16719.

L'oxyde semiconducteur formant la couche 10 peut être choisi parmi l'ensemble des oxydes semiconducteur compris dans les trois groupes suivants.

Le premier groupe comprend les oxydes des éléments de transition, les oxydes des éléments des colonnes 13 et 14 de la classification périodique moderne (cf. Cours de chimie physique de Paul Arnaud aux éditions Dunod 1988), et les oxydes des lanthanides.

Le deuxième groupe comprend les oxydes mixtes comprenant un mélange formé de deux ou plusieurs oxydes du premier groupe.

Le troisième groupe comprend les oxydes mixtes comprenant un mélange formé d'un ou plusieurs oxydes du premier groupe avec des oxydes des éléments des colonnes 1 et 2 de la classification périodique moderne.

De préférence, l'oxyde semiconducteur formant la couche 10 est choisi parmi l'ensemble des matériaux comprenant le $TiO_2$, le $La_2O_3$, le $ZrO_2$, le $Nb_2O_5$, le $WO_3$, le $SrTiO_3$, le $CaTiO_3$, le titanate de sodium, et le niobiate de potassium.

Selon un mode de réalisation particulier de l'invention, l'électrolyte 16 peut être un électrolyte liquide et peut être choisi, de préférence, parmi l'ensemble des électrolytes comprenant un couple redox constitué par le sulfate de cerium(III) et le cerium (IV), le bromure de sodium et le brome, ainsi que l'iodure de lithium et l'iode en solution dans l'un ou l'autre des solvants choisis dans l'ensemble comprenant l'eau, la N-méthyloxazolidinone, le nitrométhane, le carbonate de propylène, le carbonate d'éthylène, la butyrolactone, le diméthyl imidazolidine, le N-méthylpyrrolidine ou dans un mélange desdits solvants.

Les réactions d'oxydation et de réduction des espèces présentes dans l'électrolyte ont été représentées symboliquement au dessin au niveau des interfaces électrolyte 16/couche électrocatalytique 18 et électrolyte 16/couche d'oxyde semiconducteur 10.

Selon un autre mode de réalisation l'électrolyte 16 peut être aussi solide et dans ce cas on pourra choisir un électrolyte polymère tel que le polyoxyéthylène/Lil.

Selon une variante du mode de réalisation comprenant un électrolyte solide, l'électrolyte 16 est de préférence le iodure de lithium, et le iodure de pyridium.

La couche électrocatalytique 18 est de préférence un film transparent formé d'une à dix couches monomoléculaires d'un métal choisi parmi l'ensemble des métaux comprenant le platine, le ruthénium, le rhodium, le palladium, l'iridium, l'osmium et les oxydes conducteurs des éléments des colonnes 8 à 10 de la classification périodique moderne. La seconde couche d'oxyde semiconducteur 20 est avantageusement de même nature que la première couche 10.

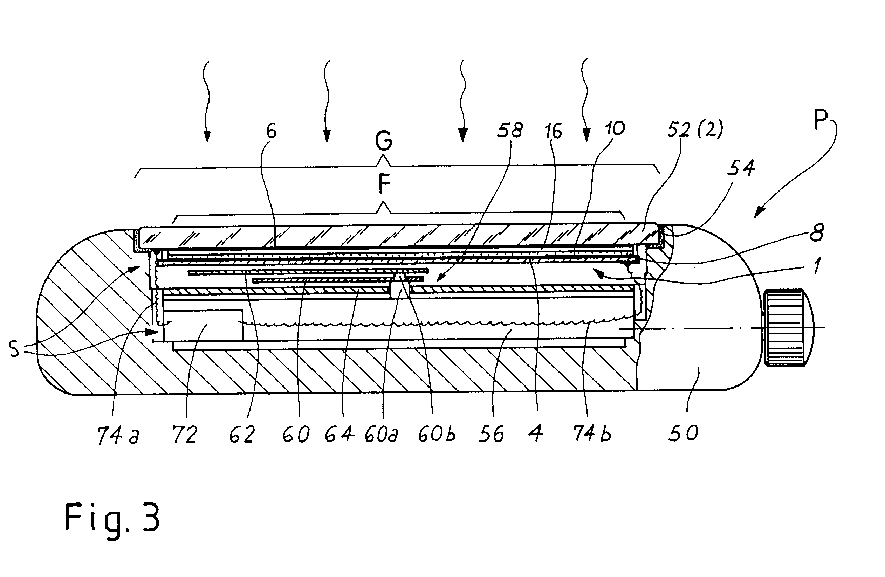

En se reportant désormais à la figure 3, on décrira ci-après une pièce d'horlogerie selon l'invention, cette pièce d'horlogerie qui est repérée par la référence générale P étant équipée d'une cellule 1, telle que celle décrite précédemment.

La pièce d'horlogerie P comporte une boîte 50 qui est représentée sur la figure 3 partiellement en coupe et sur laquelle est montée une glace 52, par exemple par l'intermédiaire d'un joint 54. La glace 52 présente une surface frontale G.

A l'intérieur de la boîte 50 est logé classiquement un mouvement 56 formant des moyens de mesure du temps, dits moyens horométriques, capables de fournir une information horaire, telle que l'heure, la minute et par exemple la seconde.

La pièce P comporte de plus des moyens d'affichage 58 qui de façon classique sont conformés pour recevoir l'information horaire fournie par les moyens horométriques 56 et qui sont destinés à afficher cette information pour la rendre lisible par un utilisateur.

Les moyens d'affichage 58 sont constitués dans l'exemple représenté par des indicateurs d'heures et de minutes formés respectivement par une aiguille des heures 60 et par une aiguille des minutes 62 disposées en regard d'un cadran 64. De façon classique, l'aiguille des heures 60 est chassée sur un canon des heures 60a, tandis que l'aiguille des minutes 62 est chassée sur un canon des minutes 60b. Les canons 60a et 60b sont liés aux organes moteurs du mouvement 56, organes qui sont pilotés par une base de temps de ce mouvement (non représentée).

L'agencement et la coopération des moyens horométriques 56 et des moyens d'affichage 58 étant donc sous une forme classique, on ne fournira pas ici de description plus détaillée.

La pièce P selon l'invention comporte une source d'énergie S comportant une cellule photovoltaïque 1, du type de celle qui a été décrite ci-avant. La cellule 1 a été représentée sur la figure 3 de façon beaucoup plus schématique que sur la figure 1 pour des raisons de clarté des dessins. Pour cette même raison certaines couches de la cellule 1 décrites en rapport avec les figures 1 et 2 ont été omises des figures 3, 5 et 6.

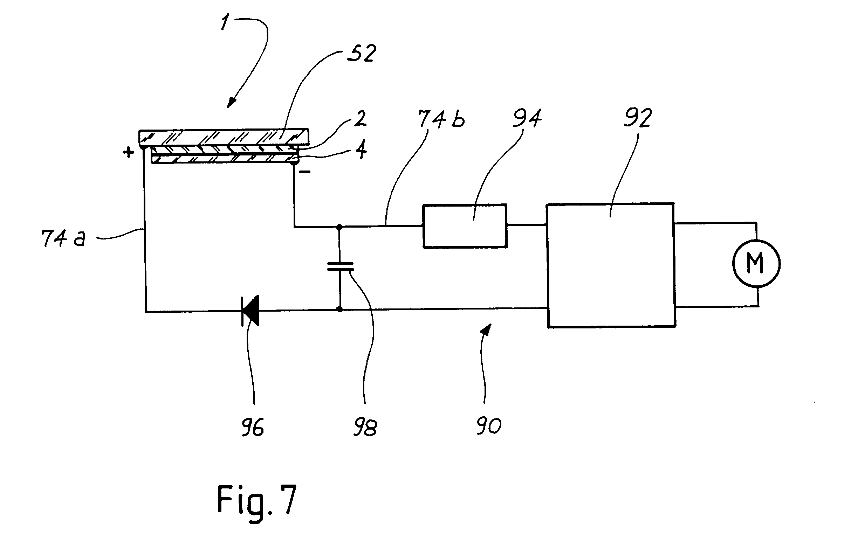

Comme on le comprend, cette cellule 1 qui est peu ou pas absorbante dans le domaine du visible et non-diffusante, est capable de transformer un rayonnement lumineux dans ce domaine d'émission, en un courant électrique pour alimenter les moyens horométriques 56, via un circuit d'alimentation électrique 72 représenté de façon plus détaillée à la figure 7. A cet effet, la cellule 1 est liée au circuit d'alimentation 72 par l'intermédiaire de conducteurs 74a et 74b.

La cellule 1 est avantageusement disposée entre la glace 52 et les moyens d'affichage 58. Plus particulièrement, la cellule 1 est solidaire de la glace 52 et elle est ménagée directement sous celle-ci.

Plus précisément, on remarquera que la cellule 1 est assujettie à la glace 52.

En effet, dans le mode de réalisation de la figure 3, l'un des substrats de la cellule 1, dans cet exemple celui référencé 2, est constitué par la glace 52 elle même. La glace 52 sur laquelle est ménagée l'électrode 6 fait donc partie intégrante de la cellule 1. La cellule 1 est donc suspendue à la glace 52

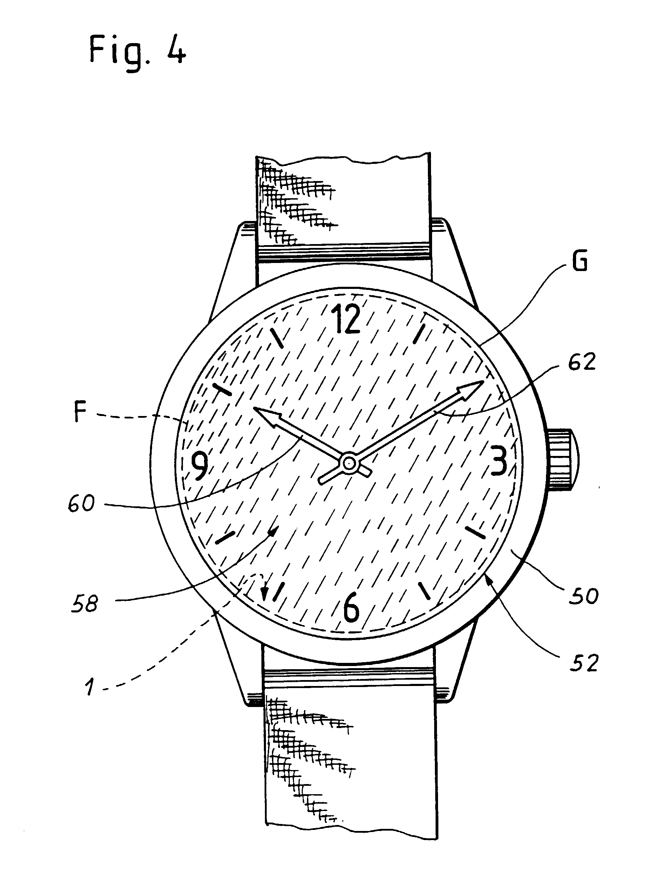

Comme on le voit sur les figures 3 et 4 la cellule 1 recouvre entièrement les moyens d'affichage 58 et s'étend sur la majeure partie de la surface frontale de cadran 64.

Bien que le mode de réalisation ici décrit soit un mode de réalisation préféré, on précisera que la cellule peut occuper une partie de la surface frontale du cadran pour ne recouvrir les moyens d'affichage 58 que de façon partielle.

La cellule 1 présente une surface active F qui est représentée sur la figure 4 avec des hachures en traits interrompus. Cette surface correspond à la projection frontale de l'empilement des différentes couches ménagées dans la cellule 1. La surface active F correspond en majeure partie à la surface frontale G de la glace 52. On remarquera à cet effet que la cellule présente au moins en projection frontale une forme géométrique qui est de même nature que celle de la glace 52, ces deux éléments étant dans cet exemple circulaires.

Etant donné que la cellule 1 est entièrement transparente et peu ou de préférence pas absorbante, ni diffusante, les moyens d'affichage 58 sont parfaitement visibles au travers de cette cellule.

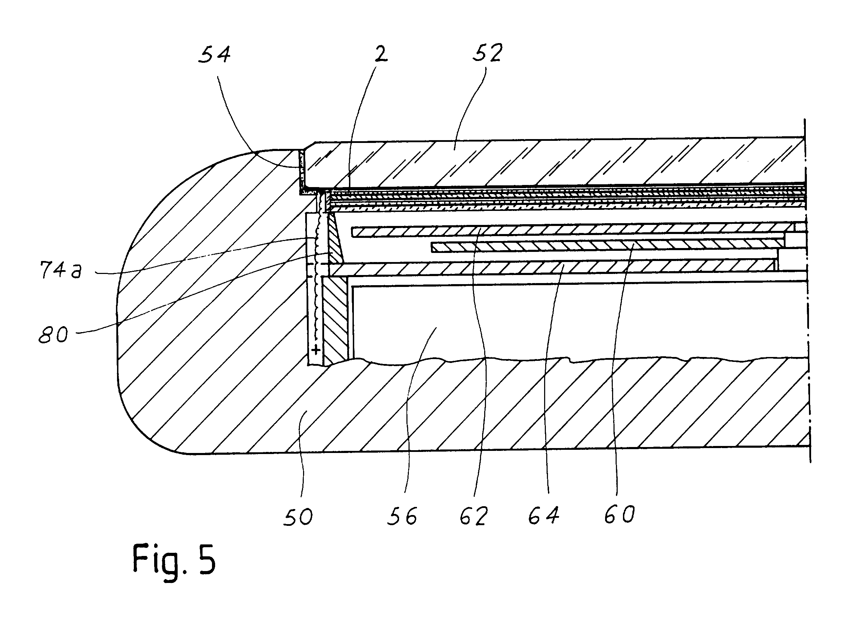

Dans le second mode de réalisation représenté à la figure 5, la cellule 1 est indépendante de la glace 52 mais reste disposée directement sous celle-ci. Le substrat 2 de la cellule 1 est donc accolé à la glace 52 sans être solidaire de celle-ci. La cellule 1 est maintenue entre la glace 52 et une bague 80 formant réhaut, posée sur le cadran 64.

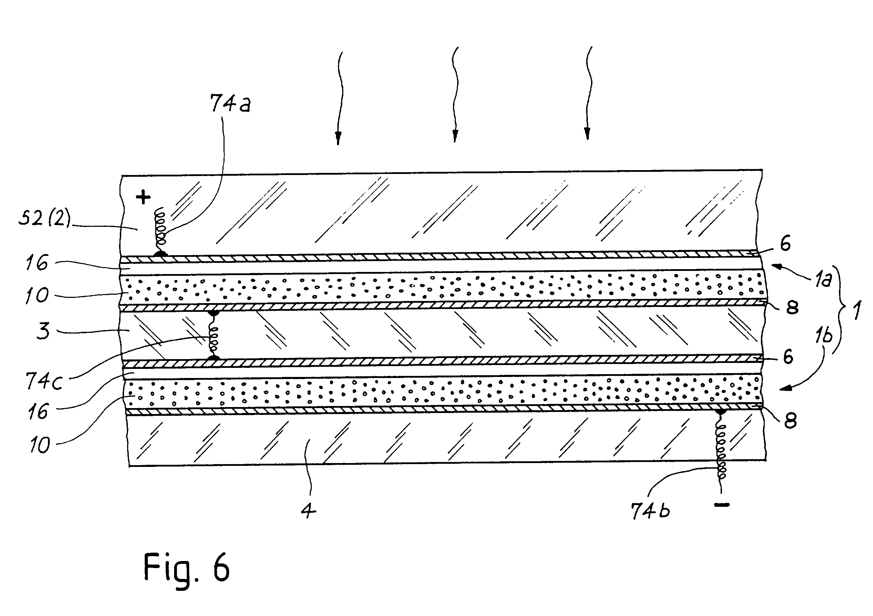

Dans la variante de réalisation de la figure 6, la cellule 1 est, comme dans la pièce de la figure 3, intégrée à la glace 52.

Toutefois, la pièce P comporte ici deux cellules respectivement supérieure 1a et inférieure 1b de même surface frontale, superposées et montées en série.

Les cellules 1a et 1b comportent donc un substrat commun 3, ou substrat intercalaire.

Les cellules 1a et 1b sont de structure identique à celle de la cellule de la figure 1.

Le substrat intercalaire ou commun 3 comporte de part et d'autre des électrodes 6 et 8, respectivement une électrode 8 de la cellule supérieure 1a et une électrode 6 de la cellule inférieure 1b.

Le conducteur 74a est connecté à l'électrode 6 de la cellule supérieure 1a, tandis que le conducteur 74b est connecté à l'électrode 8 de la cellule inférieure 1b.

Les deux cellules 1a et 1b, et notamment leurs électrodes 8 et 6 sont reliées entre elles par un conducteur commun 74c.

La figure 7 représente un schéma d'alimentation 90 relié à la cellule 1 et permettant d'alimenter un organe M de la pièce d'horlogerie fonctionnant de façon électrique.

L'organe M est ici constitué par un moteur piloté par un circuit de commande horloger 92 de structure classique auquel ce moteur M est relié électriquement.

Les conducteurs 74a et 74b sont connectés au circuit de commande 92. Sur le conducteur 74b et entre la borne négative de la cellule 1 et le circuit de commande 92 est connecté un circuit de stabilisation de tension 94 de structure classique.

Par ailleurs, sur le conducteur 74a et entre la borne positive et le circuit de commande 92 est connecté une diode 96. De plus, un condensateur 98 à capacité élevée, connu sous la marque "gold cap" est connecté entre les deux conducteurs 74a et 74b.

On comprend donc de ce qui vient d'être décrit qu'on a fourni une pièce d'horlogerie, telle qu'une montre bracelet, munie d'une cellule photoélectrochimique dite claire, qui ne diffuse pas la lumière incidente et qui n'absorbe pas ou très peu la lumière émise dans des longueurs d'ondes se situant dans le domaine du visible. Cette cellule en recouvrant entièrement le cadran, et donc les moyens d'affichage, bénéficie d'un apport d'énergie qui s'est avéré suffisant pour assurer le fonctionnement de la pièce d'horlogerie selon l'invention. Cette caractéristique est obtenue grâce au taux élevé de conversion de l'énergie fournie par la lumière incidente en énergie électrique.

## Revendications

1. Pièce d'horlogerie (P) comprenant:

   - une source d'énergie comportant au moins une cellule photovoltaïque (1) capable de transformer un rayonnement lumineux en un courant électrique, cette cellule photovoltaïque (1) comportant une surface active (F) sensible au rayonnement lumineux,
   - des moyens horométriques (56) alimentés par ladite source d'énergie et capables de fournir une information horaire, et
   - des moyens d'affichage (58) conformés pour recevoir l'information horaire fournie par les moyens horométriques (56) et destinés à afficher cette information pour la rendre lisible par un utilisateur, ces moyens d'affichage (58) étant recouverts au moins partiellement par une région transparente de la surface active (F) de la cellule photovoltaïque (1),

   caractérisée en ce que ladite cellule photovoltaïque (1) est constituée par une cellule photoélectrochimique régénératrice comprenant :

   - un premier substrat transparent (2) comportant une première électrode transparente (6),
   - un second substrat transparent (4) comportant une seconde électrode transparente (8) sur laquelle est déposée une première couche (10) d'un oxyde semiconducteur photoélectrochimiquement actif réalisée sous forme d'une nanostructure poreuse formée de particules colloïdales frittées (12), dont le diamètre est inférieur à la longueur de diffusion des porteurs de charge minoritaires créés par l'absorption dudit rayonnement lumineux dans lesdites particules,
   - un électrolyte (16) remplissant un espace compris entre lesdits premier et second substrats (2, 4) et imprégnant ladite nanostructure poreuse de façon à être en contact électrique avec lesdites première et seconde électrodes (6, 8), et

   - une seconde couche (20) continue et dense d'un oxyde semiconducteur s'étendant entre ladite seconde électrode (8) et ladite première couche (10) d'oxyde semiconducteur.

2. Pièce d'horlogerie selon la revendication 1, caractérisée en ce que ladite seconde couche (20) d'oxyde semiconducteur est de même nature que ladite première couche (10) d'oxyde semiconducteur.

3. Pièce d'horlogerie selon la revendication 1 ou 2, caractérisée en ce que ladite seconde couche (20) d'oxyde semiconducteur présente une épaisseur s'étendant entre 10 et 50 nanomètres.

4. Pièce d'horlogerie selon l'une des revendications 1 à 3, caractérisée en ce que ledit premier substrat (2) comporte en outre une couche (18) électrocatalytique s'étendant entre ladite première électrode (6) et ledit électrolyte (16).

5. Pièce d'horlogerie selon la revendication 4, caractérisée en ce que ladite couche (18) électrocatalytique est formée d'une pluralité de couches monomoléculaires d'un métal choisi parmi l'ensemble des métaux comprenant le platine, le ruthénium, le rhodium, le palladium, l'iridium, l'osmium et les oxydes conducteurs des éléments des colonnes 8 à 10 de la classification périodique moderne.

6. Pièce d'horlogerie selon l'une quelconque des revendications précédentes, caractérisée en ce que les particules colloïdales (12) formant ladite première couche (10) d'oxyde semiconducteur ont un diamètre compris entre 1 et 200 nanomètres.

7. Pièce d'horlogerie selon l'une quelconque des revendications précédentes, caractérisée en ce que la structure poreuse présente une épaisseur comprise entre 10 et 20'000 nanomètres.

8. Pièce d'horlogerie selon l'une quelconque des revendications précédentes, caractérisée en ce que ledit oxyde semiconducteur est choisi parmi l'ensemble des oxydes semiconducteurs d'un premier groupe comprenant les oxydes des éléments de transition, les oxydes des éléments des colonnes 13 et 14 de la classification périodique moderne, et les oxydes des lanthanides, d'un deuxième groupe comprenant les oxydes mixtes formés d'un mélange de deux ou plusieurs oxydes du premier groupe et d'un troisième groupe comprenant les oxydes mixtes formés d'un mélange d'un ou plusieurs oxydes du premier groupe avec des oxydes des éléments des colonnes 1 et 2 de la classification périodique moderne.

9. Pièce d'horlogerie selon la revendication 8, caractérisée en ce que ledit oxyde semiconducteur est choisi parmi l'ensemble des matériaux comprenant le $TiO_2$, le $La_2O_3$, le $ZrO_2$, le $Nb_2O_5$, le $WO_3$, le $SrTiO_3$, le $CaTiO_3$, le titanate de sodium, et le niobiate de potassium.

10. Pièce d'horlogerie selon l'une quelconque des revendications précédentes, caractérisée en ce que ledit électrolyte est un électrolyte liquide et est choisi parmi l'ensemble des électrolytes comprenant un couple redox constitué par le sulfate de cerium (III) et le cerium (IV), le bromure de sodium et le brome, ainsi que l'iodure de lithium et l'iode en solution dans l'un ou l'autre des solvants choisis dans l'ensemble comprenant l'eau, la N-méthyloxazolidinone, le nitrométhane, le carbonate de propylène, le carbonate de d'éthylène, la butyrolactone, le diméthyl imidazolidine, le N-méthylpyrrolidine ou dans un mélange desdits solvants.

11. Pièce d'horlogerie selon l'une quelconque des revendications 1 à 9, caractérisée en ce que ledit électrolyte est solide.

12. Pièce d'horlogerie selon la revendication 11, caractérisée en ce que ledit électrolyte est un polymère électrolyte.

13. Pièce d'horlogerie selon la revendication 11, caractérisée en ce que ledit électrolyte est du poly-oxyéthylène/LiI.

14. Pièce d'horlogerie selon la revendication 11, caractérisée en ce que ledit électrolyte comprend de l'iodure de lithium, et de l'iodure de pyridium.

15. Pièce d'horlogerie selon l'une quelconque des revendications précédentes, caractérisée en ce que ladite surface active (F) de la cellule (1) recouvre la majeure partie des moyens d'affichage (58).

16. Pièce d'horlogerie selon l'une quelconque des revendications précédentes, caractérisée en ce que toute la surface active (F) de la cellule (1) est transparente.

17. Pièce d'horlogerie selon l'une quelconque des revendications précédentes, caractérisée en ce que ladite cellule (1) est disposée entre une glace (52) de cette pièce et lesdits moyens d'affichage (58).

18. Pièce d'horlogerie selon la revendication 17, caractérisée en ce que ladite cellule (1) est solidaire de la glace (52).

19. Pièce d'horlogerie selon la revendication 18, caractérisée en ce que ladite cellule (1) est disposée directement sous la glace (52).

20. Pièce d'horlogerie selon la revendication 19, caractérisée en ce que ladite cellule (1) est suspendue à la glace (52).

21. Pièce d'horlogerie selon la revendication 20, caractérisée en ce que l'un des substrats (2) de ladite cellule (1) est constitué par ladite glace (52).

**Patentansprüche**

1. Zeitmeßgerät (P), umfassend:

   - eine Energiequelle umfassend zumindest eine photovoltaische Zelle (1), die fähig ist, eine Lichtstrahlung in einen elektrischen Strom umzusetzen, welche photovoltaische Zelle (1) eine aktive Oberfläche (F) aufweist, die gegenüber Lichtstrahlung empfindlich ist,
   - zeithaltende Mittel (56), gespeist von der Energiequelle und fähig, eine Zeitinformation zu liefern, und
   - Anzeigemittel (58), ausgebildet zum Empfang der von den zeithaltenten Mitteln (56) gelieferten Zeitinformation und bestimmt zum Anzeigen dieser Information, um sie für einen Benutzer ablesbar zu machen, welche Anzeigemittel (58) mindestens teilweise mit einem transparenten Bereich der aktiven Oberfläche (F) der photovoltaischen Zelle (1) überdeckt sind,

   dadurch gekennzeichnet, daß die photovoltaische Zelle (1) von einer photoelektrochemischen regenerativen Zelle gebildet ist, umfassend:

   - ein erstes transparentes Substrat (2), umfassend eine erste transparente Elektrode (6),
   - ein zweites transparentes Substrat (4), umfassend eine zweite transparente Elektrode (8), auf der eine erste Schicht (10) eines halbleitenden photoelektrochemisch aktiven Oxids aufgebracht ist, realisiert in Form einer porösen Nanostruktur, gebildet von kolloidalen gesinterten Partikeln (12), deren Durchmesser kleiner ist als die Diffusionslänge von Minoritätsladungsträgern, die durch die Absorption der Lichtstrahlung in den Partikeln erzeugt werden,
   - einen Elektrolyten (16), der einen zwischen dem ersten und dem zweiten Substrat (2, 4) vorhandenen Raum füllt und die poröse Nanostruktur derart imprägniert, daß ein elektrischer Kontakt mit der ersten und der zweiten Elektrode (6, 8) besteht, und
   - eine zweite durchgehende und dichte Schicht (20) eines halbleitenden Oxids, die sich zwischen der zweiten Elektrode (8) und der ersten Schicht (10) aus halbleitendem Oxid erstreckt.

2. Zeitmeßgerät nach Anspruch 1, dadurch gekennzeichnet, daß die zweite Schicht (20) aus halbleitendem Oxid von gleicher Natur ist wie die erste Schicht (10) aus halbleitendem Oxid.

3. Zeitmeßgerät nach Anspruch 1 oder 2, dadurch gekennzeichnet, daß die zweite Schicht (20) aus halbleitendem 0xid eine Dicke aufweist, die zwischen 10 und 50 Nanometern liegt.

4. Zeitmeßgerät nach einem der Ansprüche 1 bis 3, dadurch gekennzeichnet, daß das erste Substrat (2) ferner eine elektrokatalytische Schicht (18) umfaßt, die sich zwischen der ersten Elektrode (6) und dem Elektrolyten (16) befindet.

5. Zeitmeßgerät nach Anspruch 4, dadurch gekennzeichnet, daß die elektrokatalytische Schicht (18) von einer Mehrzahl von monomolekularen Schichten Eines Metalls gebldet ist, ausgewählt unter der Gruppe von Metallen, umfassend Platin, Ruthenium, Rhodium, Palladium, Iridium, Osmium und leitenden Oxiden der Elemente der Spalten 8 bis 10 des modernen Periodensystems.

6. Zeitmeßgerät nach einem der vorangehenden Ansprüche, dadurch gekennzeichnet, daß die die erste Schicht (10) aus halbleitendem Oxid bildenden kolloidalen Partikeln (12) einen Durchmesser zwischen 1 und 200 Nanometern haben.

7. Zeitmeßgerät nach einem der vorangehenden Ansprüche, dadurch gekennzeichnet, daß die poröse Struktur eine Dicke zwischen 10 und 20 000 Nanometern besitzt.

8. Zeitmeßgerät nach einem der vorangehenden Ansprüche, dadurch gekennzeichnet, daß das halbleitende 0xid unter der Gruppe von halbleitenden Oxiden einer ersten Gruppe ausgewählt ist, umfassend die Oxide der Übergangselemente, die Oxide der Elemente der Spalten 13 und 14 des modernen Periodensystems und den Lanthanidenoxiden einer zweiten Gruppe umfassend Mischoxide, gebildet von einem Gemisch von zwei oder mehr Oxiden der ersten Gruppe, und einer dritten Gruppe, umfassend die gemischten Oxide, gebildet von einem Gemisch eines oder mehrerer Oxide der ersten Gruppe mit Oxiden der Elemente der Spalten 1 und 2 des modernen Periodensystems.

9. Zeitmeßgerät nach Anspruch 8, dadurch gekennzeichnet, daß das halbleitende Oxid unter der Gruppe von Materialien ausgewählt ist, welche $TiO_2$,

$La_2O_3$, $ZrO_2$, $Nb_2O_5$, $WO_3$, $SrTiO_3$, $CaTiO_3$, Natriumtitanat und Kaliumniobat umfaßt.

10. Zeitmeßgerät nach einem der vorangehenden Ansprüche, dadurch gekennzeichnet, daß der Elektrolyt ein flüssiger Elektrolyt ist und ausgewählt ist unter der Gruppe von Elektrolyten, umfassend ein Redoxpaar, gebildet von Cer-(III)-Sulfat und Cer-(IV)-Sulfat, dem Natriumbromid und Brom wie auch Lithiumjodid und Jod in Lösung in dem einem oder anderen der Lösungsmittel, ausgewählt aus der Gruppe, umfassend Wasser, N-Methyloxazolidinon, Nitromethan, Propylenkarbonat, Äthylenkarbonat, Butyrolacton, Dimethylimidazolidin, N-Methylpyrrolidin oder in einem Gemisch der genanten Lösungsmittel.

11. Zeitmeßgerät nach einem der Ansprüche 1 bis 9, dadurch gekennzeichnet, daß der Elektrolyt ein Feststoff ist.

12. Zeitmeßgerät nach Anspruch 11, dadurch gekennzeichnet, daß der Elektrolyt ein Polymerelektrolyt ist.

13. Zeitmeßgerät nach Anspruch 11, dadurch gekennzeichnet, daß der Elektrolyt Polyoxiäthylen/Lil ist.

14. Zeitmeßgerät nach Anspruch 11, dadurch gekennzeichnet, daß der Elektrolyt Lithiumjodid und Pyridiumjodid umfaßt.

15. Zeitmeßgerät nach einem der vorangehenden Ansprüche, dadurch gekennzeichnet, daß die aktive Oberfläche (F) der Zelle (1) die größere Partie der Anzeigemittel (58) überdeckt.

16. Zeitmeßgerät nach einem der vorangehenden Ansprüche, dadurch gekennzeichnet, daß die gesamte aktive Oberfläche (F) der Zelle (1) transparent ist.

17. Zeitmeßgerät nach einem der vorangehenden Ansprüche, dadurch gekennzeichnet, daß die Zelle (1) zwischen einem Uhrglas (52) und den Anzeigemitteln (58) angeordnet ist.

18. Zeitmeßgerät nach Anspruch 17, dadurch gekennzeichnet, daß die Zelle (1) mit dem Glas (52) verbunden ist.

19. Zeitmeßgerät nach Anspruch 18, dadurch gekennzeichnet, daß die Zelle (1) direkt auf dem Glas (52) angeordnet ist.

20. Zeitmeßgerät nach Anspruch 19, dadurch gekennzeichnet, daß die Zelle (1) am Glas (52) hängend ist.

21. Zeitmeßgerät nach Anspruch 20, dadurch gekennzeichnet, daß eines der Substrate (2) der Zelle (1) von dem Glas (52) gebildet ist.

## Claims

1. Horological piece (P) including :

   - an energy source including at least one photovoltaic cell (1) capable of transforming luminous radiation into an electrical current, this photovoltaic cell (1) including an active surface (F) sensitive to luminous radiation,
   - horometrical means (56) supplied by said energy source and capable of supplying time keeping information, and
   - display means (58) adapted to receive the time keeping information supplied by the horometrical means (56) and intended to display this information so that it is readable by a user, these display means (58) being covered at least partially with a transparent region of the active surface (F) of the photovoltaic cell (1),

   characterized in that said photovoltaic cell (1) is constituted by a regenerating photovoltaic cell comprising :

   - a first transparent substrate (2) having a first transparent electrode (6),
   - a second transparent substrate (4) having a second transparent electrode (8) on which is deposited a first layer (10) of a photoelectrochemically active semiconductor oxide in the form of a porous nanostructure formed of sintered colloidal particles (12) the diameter of which is less than the diffusion length of the minority charge carriers created by the absorption of said luminous radiation in said particles,
   - an electrolyte (16) filling a space between said first and second substrates (2, 4) and impregnating said porous nanostructure in a manner such that it is in electrical contact with said first and second electrodes (6, 8), and
   - a second continuous and compact layer (20) of a semiconductor oxide extending between said second electrode (8) and said first semiconductor oxide layer (10).

2. Horological piece according to claim 1, characterized in that said second semiconductor oxide layer (20) is of the same type as said first semiconductor oxide layer (10).

3. Horological piece according to claim 1 or 2, characterized in that said second semiconductor oxide layer (20) has a thickness of from 10 to 50 nanometers.

4. Horological piece according to one of claims 1 to 3, characterized in that said first substrate (2) also has an electrocatalytic layer (18) extending between said first electrode (6) and said electrolyte (16).

5. Horological piece according to claim 4, characterized in that said electrocatalytic layer (18) is made up of a plurality of monomolecular layers of a metal selected from the group of metals comprising platinum, ruthenium, rhodium, palladium, iridium, osmium and conducting oxides of the elements of columns 8 to 10 of the modern periodic classification table.

6. Horological piece according to any one of the preceding claims, characterized in that the colloidal particles (12) forming said first semiconductor oxide layer (10) have a diameter of from 1 to 200 nanometers.

7. Horological piece according to any one of the preceding claims, characterized in that the porous structure has a thickness of from 10 to 20,000 nanometers.

8. Horological piece according to any one of the preceding claims, characterized in that said semiconductor oxide is selected from amongst semiconductor oxides of a first group comprising the oxides of the transition elements, the oxides of the elements of columns 13 and 14 of the modern periodic classification table and the oxides of rare earths, of a second group comprising the mixed oxides formed of a mixture of two or several oxides of the first group and of a third group comprising the mixed oxides formed of a mixture of one or several oxides of the first group with the oxides of the elements of columns 1 and 2 of the modern periodic classification table.

9. Horological piece according to claim 8, characterized in that said semiconductor oxide is selected from the group of materials comprising of $TiO_2$, $La_2O_3$, $ZrO_2$, $Nb_2O_5$, $WO_3$, $SrTiO_3$, $CaTiO_3$, sodium titanate and potassium niobate.

10. Horological piece according to any one of the preceding claims, characterized in that said electrolyte is a liquid electrolyte and is selected from the group of electrolytes comprising a redox couple composed of cerium(III) sulfate and cerium (IV), sodium bromide and bromine, as well as lithium iodide and iodine in solution in one or other of the solvents selected from amongst water, N-methyloxazolidinone, nitromethane, propylene carbonate, ethylene carbonate, butyrolactone, dimethyl imidazolidine, N-methylpyrrolidine or in a mixture of said solvents.

11. Horological piece according to any one of claims 1 to 9, characterized in that the electrolyte is solid.

12. Horological piece according to claim 11, characterized in that said electrolyte is a polymer electrolyte.

13. Horological piece according to claim 11, characterized in that said electrolyte is polyoxyethylene/LiI.

14. Horological piece according to claim 11, characterized in that said electrolyte comprises lithium iodide and pyridium iodide.

15. Horological piece according to any one of the preceding claims, characterized in that said active surface (F) of the cell (1) covers the majority of display means (58).

16. Horological piece according to any one of the preceding claims, characterized in that the entire active surface (F) of the cell (1) is transparent.

17. Horological piece according to any one of the preceding claims, characterized in that said cell (1) is located between a glass (52) of this piece and said display means (58).

18. Horological piece according to claim 17, characterized in that said cell (1) engages to the glass (52).

19. Horological piece according to claim 18, characterized in that said cell (1) is located directly under the glass (52).

20. Horological piece according to claim 19, characterized in that said cell (1) is suspended from the glass (52).

21. Horological piece according to claim 20, characterized in that one of the substrates (2) of said cell (1) is constituted by said glass (52).

## Fig. 1

$$x^- \longrightarrow x + e^-$$

$$x^- \longleftarrow x + e^-$$

## Fig. 2

Fig. 3

EP 0 586 643 B1

# Fig. 4

Fig. 5

EP 0 586 643 B1

74a

52 (2)

16
10
3
74c
16
10

6
1a
8
1
1b
6
8

+

−

74b

4

Fig. 6

Fig. 7